# EUROPEAN PATENT APPLICATION

(11) **EP 4 722 665 A2**
(43) Date of publication of application: **08.04.2026**
(21) Application number: 26153081.0
(22) Date of filing: 27.05.2021
(51) Int. Cl.: G01F 23/72

(54) **APPARATUS AND METHOD OF MONITORING THE LEVEL OF A LIQUID MEDIUM IN A CONTAINER**

(62) Divisional of application: 21817237.7
(71) Applicant: Munafo, Tamir Damian, 7193200 Naale (IL); Sherman, Moti, 4481000 Sharey Tikva (IL); Nidam, Ofir, 4947807 Petach Tikva (IL)
(72) Inventor: Munafo, Tamir Damian, 7193200 Naale (IL); Sherman, Moti, 4481000 Sharey Tikva (IL); Nidam, Ofir, 4947807 Petach Tikva (IL)
(74) Representative: Pearl Cohen UK

(57) **Abstract**

An apparatus for monitoring a level of a liquid in a container, comprising a container configured to contain a liquid; a free-floating float disposed within the container, the float comprising a sealed housing, an onboard electric power source, at least one magnetic proximity sensor, an actuation module operatively coupled to the magnetic proximity sensor, and an alerting device operatively coupled to the actuation module; and a magnetic reference element positioned external to the container; wherein the float is configured to move vertically with changes in a liquid level within the container; wherein the magnetic proximity sensor is configured to detect proximity of the magnetic reference element through a wall of the container; and wherein the actuation module is configured to activate the alerting device when the detected proximity corresponds to a predetermined liquid level.

## Description

### FIELD OF THE INVENTION

The present invention relates generally to fluid level monitoring. More particularly, to a method and apparatus for monitoring of the level of a non-gaseous fluid (liquid) or fluidic substance in a container, by magnetic proximity sensors.

### BACKGROUND OF THE INVENTION

Determination of fluid (liquid) level being lower or higher than a predetermined level is useful for various applications. Accordingly, a signal can be generated either warning an operator or automatically taking action such as controlling an intake or discharge. This will prevent the container from being empty or from overflowing, and allows the user to schedule the re-filling. One particular application is a water dispenser for a pet or a water feeder, which includes means for determining a low water level condition to activate an alarm or replenish the water supply. Thereby, the pet's water supply can be maintained so that the pet does not run out of water.

It is usually difficult for a user to determine whether there is enough drinking water in the water dispenser/feeder for the pet when observed from afar. This may lead to the user failing to add water into the water dispenser/feeder timely leading to pets suffering from thirst. The problem further increases if there are a plurality of pets and it is cumbersome for a user to track physically the water level of each water dispenser/feeder. Even at night, or during power failure, due to unavailability of any proper light source, tracking and monitoring of the liquid level in the water dispenser/feeder is difficult.

Reference is made to CN201061222Y disclosing a pet drinker with prompt function, for prompting water filling. The utility model comprises a water container, water level indicator, a sensor and a prompter, wherein the water container comprises a water groove for filling water, the water level indicator is fixed on the water container, to move along with the water quantity change of the water groove, the sensor is arranged relative to the water level indicator for detecting the motion of the water level indicator, and the prompter is electrically connected with the sensor, for receiving the sensor signal to prompt user. Therefore, when the drink water is reduced to low level, the utility model can quickly prompt user to feed water.

Reference is also made to US5767775A, EP0837304A1, US6218949B1 and US8549911B2, wherein the prior arts in general teaches various sensor and apparatus for monitoring the level of a liquid medium in a container.

However, there is a need for an efficient liquid level monitoring method and an apparatus thereof which allows distant observation and determination of whether there is enough liquid in the container, especially in applications such as a water feeder for a pet.

### SUMMARY OF THE INVENTION

The following presents a simplified summary of the invention in order to provide a basic understanding of some aspects of the invention. This summary is not an extensive overview of the present invention. It is not intended to identify the key/critical elements of the invention or to delineate the scope of the invention. Its sole purpose is to present some concept of the invention in a simplified form as a prelude to a more detailed description of the invention presented later.

An object of present invention is to address the drawbacks of the existing prior art and provide an efficient fluid (liquid) level monitoring method and an apparatus thereof which allows distant observation and determination of whether there is enough liquid in the container.

According to one aspect of the present invention, an apparatus for monitoring of a level of a liquid medium comprises: a container, configured to contain a liquid medium therein; an attachment band disposed on exterior wall of the container, the attachment band comprises at least one permanent magnet, embedded therein; and a free float comprising an electric circuitry comprising: a battery; at least one magnetic proximity sensor; an alarming device configured for generating an alert, in which the alarming device is selected form the group consisting of: a LED, flicker, buzzer, IoT device and communication device; an actuation module configured to controllably activating the alarming device, in which actuation of the actuation module is controlled by the at least one magnetic proximity sensor; in which the float being disposed within the container and free-floating or immersed on top of the liquid so that the float moves laterally and vertically into and out of proximity of the permanent magnets embedded within the attachment band, with variance of the level of the liquid; in which proximity of the float to the attachment band is sensed by the at least one magnetic proximity sensor embedded within the float, when the float is in proximity with the permanent magnets embedded within the attachment band.

According to one aspect of the present invention, a method for monitoring of a level of a liquid medium comprises the steps of: providing a container, configured to contain a liquid medium therein; providing an apparatus for monitoring of a level of a liquid medium, in which the apparatus comprises the steps of : providing an attachment band disposable on exterior wall of a liquid medium container, the attachment band comprises at least one permanent magnet embedded therein; and providing a free float comprising an electric circuitry comprising: an electrical battery; at least one magnetic proximity sensor; an alarming device configured for generating an alert, in which the alarming device is selected from the group consisting of: a LED, flicker, buzzer, IoT device and communication device; an actuation module configured to controllably activating the alarming device, in which actuation of the actuation module is controlled by the at least one magnetic proximity sensor; in which the float free-floating or immersed on top of the liquid so that the float moves laterally and vertically into and out of proximity of the permanent magnets embedded within the attachment band, with variance of the level of the liquid; in which proximity of the float to the attachment band is sensed by the at least one magnetic proximity sensor embedded within the float, when the float is in proximity with the permanent magnets embedded within the attachment band.

According to another aspect of the present invention, an apparatus for monitoring of a level of a liquid medium comprises: a container, configured to contain a liquid medium therein; an attachment band disposed on exterior wall of the container, the attachment band comprises: an electric power source; at least one magnetic proximity sensor; an alarming device configured for generating an alert, in which the alarming device is selected form the group consisting of: a LED, flicker, buzzer, IoT device and communication device; an actuation module configured to controllably activating the alarming device, in which actuation of the actuation module is controlled by the at least one magnetic proximity sensor; a free float comprising at least one permanent magnet; in which the float being disposed within the container and free-floating or immersed on top level of the liquid, so that the float moves laterally and vertically into and out of proximity of the magnetic proximity sensors with variance of the level of the liquid, and in which proximity of the float to the attachment band is sensed by the magnetic proximity sensors embedded within the attachment band when the float is in proximity with the magnetic proximity sensors.

According to another aspect of the present invention, a method for monitoring of a level of a liquid medium comprises the steps of: providing a container, configured to contain a liquid medium therein; providing an apparatus for monitoring of a level of a liquid medium, in which the apparatus comprises the steps of: providing an attachment band disposable on exterior wall of a liquid medium container, the attachment band comprises at least one permanent magnet embedded therein; providing a free float comprising an electric circuitry comprising: an electrical battery; at least one magnetic proximity sensor; an alarming device configured for generating an alert, in which the alarming device is selected from the group consisting of: a LED, flicker, buzzer, IoT device and communication device; an actuation module configured to controllably activating the alarming device, in which actuation of the actuation module is controlled by the at least one magnetic proximity sensor; and providing a free float comprising at least one permanent magnets; in which the float free-floating or immersed on a top level of a liquid, so that the float moves laterally and vertically into and out of proximity of the magnetic proximity sensors with variance of a level of the liquid, and in which proximity of the float to the attachment band is sensed by the magnetic proximity sensors embedded within the attachment band when the float is in proximity with the magnetic proximity sensors.

Other aspects, advantages, and salient features of the invention will become apparent to those skilled in the art from the following detailed description, which, taken in conjunction with the annexed drawings, discloses exemplary embodiments of the invention.

### DEFINITIONS

The terms fluid or liquid, which may be used interchangeably in the specification hereunder, refer to any non-gaseous fluid, including liquids as well as fluidic substances, such as: powders, granular materials and any other fine solid bulk particles that may flow freely when shaken or tilted.

The term water shall particularly include water that is fit for consumption by a living organism and/or make the water potable. In certain embodiments the living organism is a "mammal" or "mammalian", where these terms are used broadly to describe organisms which are within the class mammalia, including the orders carnivore, rodentia and primates or humans. In some embodiments of the disclosed systems, desalination is removing an amount of salt and/or other minerals or components from saline water so that the water is fit for a specific purpose (e.g., irrigation or industry).

The terms pet or alike refer to any living organism, including domestic pets, animal livestock husbandry, such as cattle and poultry, wildlife animals and birds as well as plants, fungi and mosses, which require watering, drinking or irrigation.

The terms a float, free float or alike are to be construed as including any solid object immersible in a fluid and capable of being spontaneously buoyant at the top portion and/or on the surface of such fluid's level. The terms a float, free float or alike are to be construed as including any solid object configured to stay at the top portion and/or on the top surface of a level of a fluid such as: powder, granular material and any other fine solid bulk particles.

The terms elastic or resilient, as referred to herein, are to be construed as having tensile strength lower than aforesaid tensile strength of pliable or pliant material and optionally being capable of efficiently stretching or expanding, relating inter alia to essentially ductile materials, having UTS value lesser than about 600 MPa.

The term printed circuit board and/or acronym PCB, as referred to herein, should be construed as encompassing any type of a circuit board, not intended to limit to any particular board type or production technique, including inter alia non-printed circuit boards. device. The term printed circuit board and/or acronym PCB particularly include any type of structure configured to mechanically support and/or electrically connect electric and electronic components, such as: Printed Wire Boards (PWB), Printed Circuit Assemblies (PCA), Printed Circuit Board Assemblies (PCBA), Circuit Card Assemblies (CCA), Flexible Circuit Boards (FCB), integrated circuits (IC), monolithic integrated circuits (often referred to as a chips or microchips), chipsets and etc. The term printed circuit board and/or acronym PCB optionally include embedded software, written to control machines or devices that are not typical computers. Embedded software is specialized for the particular hardware and sometimes used interchangeably with the term firmware. A characteristic of embedded software is that no or at least not all functions thereof are initiated and/or controlled via a human interface but rather through machine-interfaces instead.

The term storage as referred to herein is to be construed as including one or more of volatile or non-volatile memory, hard drives, flash storage devices and/or optical storage devices, e.g. CDs, DVDs, etc. The term "computer-readable media" as referred to herein can include transitory and non-transitory computer-readable instructions, whereas the term "computer-readable storage media" includes only non-transitory readable storage media and excludes any transitory instructions or signals. The terms "computer-readable media" and "computer-readable storage media" encompass only a computer-readable media that can be considered a manufacture (i.e., article of manufacture) or a machine. Computer-readable storage media includes "computer-readable storage devices". Examples of computer-readable storage devices include volatile storage media, such as RAM, and non-volatile storage media, such as hard drives, optical discs, and flash memory, among others.

The terms notification and/or message as used herein refer to a communication provided by a notification system to a message recipient device. A notification and/or message may be used to inform one or more recipient device, for example a notification and/or messages may be provided to the one or more recipient device, in a non-limiting manner using SMS texts, MMS texts, E-mail, Instant Messages, mobile device push notifications, HTTP requests, voice calls, telephone calls, Voice Over IP (VOIP) calls or alike, library function calls, API calls, URLs as well as any signals transferred, transmitted or relayed, as defined herein or any combination thereof.

The term "Internet of Things" or "IoT" may be used by those in the network field to refer to uniquely identifiable objects (things) and their virtual representations in a network-based architecture. In particular, as used herein, the term "IoT module" may refer to a computing device that has a particular intended functionality not of only connecting to computers and other network communicable devices, but also the ability to connect "objects" in general, such as lights, appliances, HVAC (heating, ventilating, and air-conditioning), windows, window shades, and blinds, doors, locks, etc.

By "operationally connected" and "operably coupled", as used herein, is meant connected in a specific way (e.g., in a manner allowing water to move and/or electric power to be transmitted) that allows the disclosed system and its various components to operate effectively in the manner described herein.

As used herein, the term "or" is an inclusive "or" operator, equivalent to the term "and/or," unless the context clearly dictates otherwise; whereas the term "and" as used herein is also the alternative operator equivalent to the term "and/or," unless the context clearly dictates otherwise.

It is to be understood that the singular forms "a," "an," and "the" include plural referents unless the context clearly dictates otherwise. Thus, for example, reference to "a component surface" includes reference to one or more of such surfaces.

All terms (including technical and scientific terms) used herein have the same meaning as commonly understood by one of ordinary skill in the art to which various embodiments belong. Further, the meaning of terms or words used in the specification and the claims should not be limited to the literal or commonly employed sense, but should be construed in accordance with the spirit of the disclosure to most properly describe the present disclosure.

The terminology used herein is for the purpose of describing particular various embodiments only and is not intended to be limiting of various embodiments. As used herein, the singular forms "a", "an" and "the" are intended to include the plural forms as well, unless the context clearly indicates otherwise. It will be further understood that the terms "comprises" and/or "comprising" used herein specify the presence of stated features, integers, steps, operations, members, components, and/or groups thereof, but do not preclude the presence or addition of one or more other features, integers, steps, operations, members, components, and/or groups thereof.

It should be understood, however, that neither the particular definitions hereinabove are not to limit interpretation of the invention to the specific forms and examples but rather on the contrary are to cover all modifications, equivalents and alternatives falling within the scope of the invention.

### BRIEF DESCRIPTION OF ACCOMPANYING DRAWINGS

The above and other aspects, features and advantages of the embodiments of the present disclosure will be more apparent in the following description taken in conjunction with the accompanying drawings, in which:
**Figure 1** illustrates a schematic of an apparatus for monitoring of a level of a liquid within a container, according to an embodiment of present invention.
**Figure 2** illustrates a schematic of an apparatus for monitoring of a level of a liquid within a container in operation, according to an embodiment of present invention.
**Figure 3** illustrates an exploded perspective view of the different components of an apparatus for monitoring of a level of a liquid within a container, according to an embodiment of present invention.
**Figure 4A** illustrates a schematic electric circuitry of the free float for monitoring of a level of a liquid within container, in a latent mode, according to an embodiment of present invention.
**Figure 4B** illustrates a schematic electric circuitry of the free float for monitoring of a level of a liquid within container, in an active mode, according to an embodiment of present invention.
**Figure 5** illustrates is a schematic diagram for an exemplary IoT device.
**Figure 6** illustrates a schematic diagram of an exemplary computing environment.

### DETAILED DESCRIPTION

The subject invention lies in an apparatus for effective, remote monitoring of a level of a liquid within a container, especially in water feeder for pets and a method thereof.

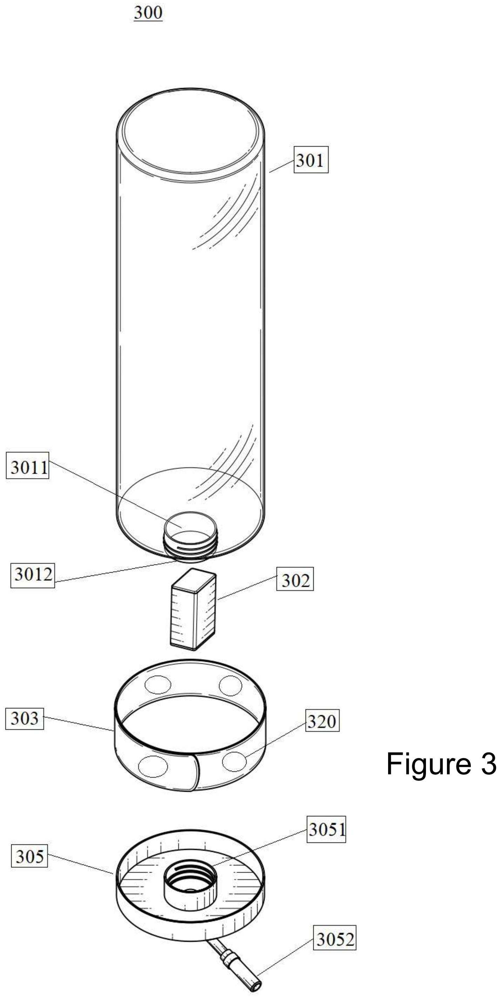

According to an embodiment, as shown in **Figure 3****,** an apparatus **300** for monitoring a level of a liquid, comprises a container **301** to contain the liquid within. The container **301** has at least one aperture **3011** for outlet of the liquid contained within, and the container **301** is rotatably coupled to a lower lid **305.** The container **301** has an externally threaded protrusion **3012** origination from the aperture **3011** thereof, which engages with an internally counter threaded upward protrusion **3051** from the internal base of the lower lid **305.** The lower lid **305** thus connects the at least one aperture **3011** of the container **301** to at least one nozzle/output **3052.** The apparatus **300** further comprises a float **302** and an attachment band **303.**

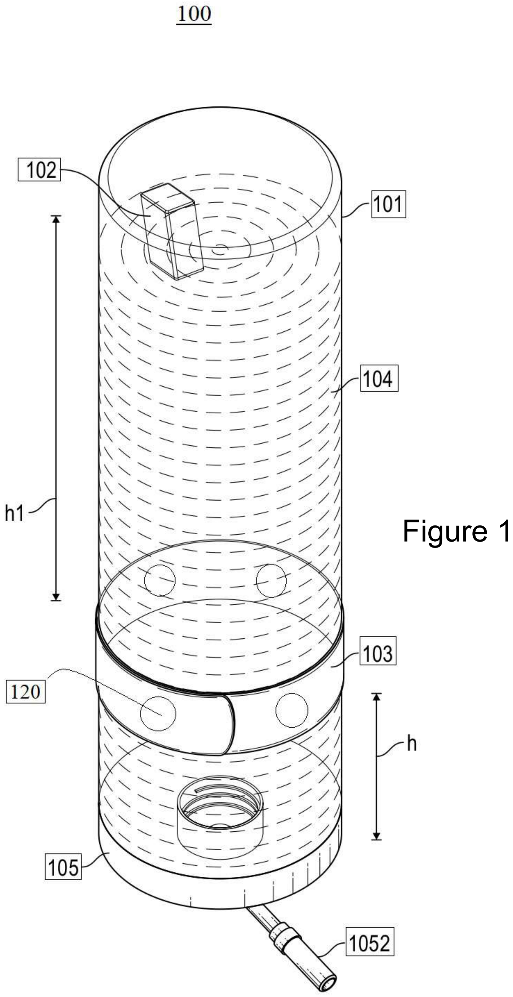

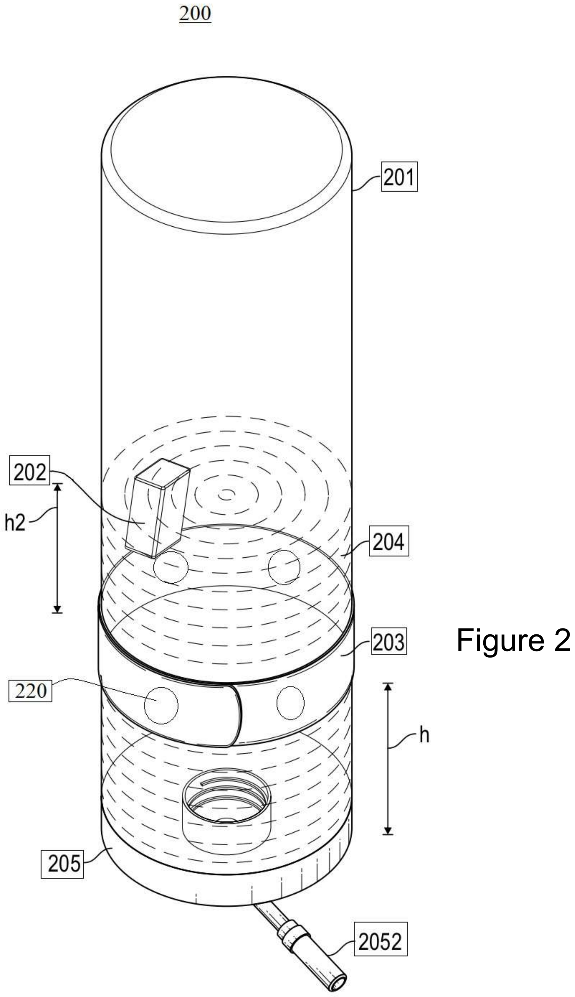

According to an embodiment, one or more permanent magnets **120, 220** are embedded within the attachment band **103, 203, 303** disposed on the exterior wall of the container **101, 201, 301,** and a free float **102, 202, 302** comprising an electric circuitry comprising a power source, one or more magnetic proximity sensors and an alarming device, as will be elaborated infra. The power source, as referred to herein, includes rechargeable battery, non-rechargeable battery, , magnetic induction, wire connection, an electric socket such as: micro-USB, mini-USB and USB-C. Free float **102, 202, 302** is disposed within the container and free-floats on the top level of the liquid **104, 204** contained within. The float **102, 202, 302** moves laterally and vertically into and out of proximity of said permanent magnets **120, 220** embedded within the attachment band **103, 203, 303,** with variance of the level of the liquid **104, 204,** as shown in **Figures 1** and 2. The proximity of the float **102, 202, 302** is sensed by the magnetic proximity sensor/s embedded within the float **102, 202, 302,** when the float approximates said permanent magnets **120, 220** embedded within the attachment band **103, 203, 303.**

According to an embodiment, one or more magnetic proximity sensors alongside the respective electric circuitry of are embedded within the attachment band **103, 203, 303** disposed on the exterior wall of the container **101, 201, 301,** whereas a free float **102, 202, 302** comprising one or more permanent magnets **120, 220,** is disposed within the container and free-floats on the liquid **104, 204** contained within. The float **102, 202, 302** moves laterally and vertically into and out of proximity of said magnetic proximity sensors embedded within the attachment band **103, 203, 303,** with variance of the level of the liquid, as shown in **Figures 1** and **2****.** The proximity of the permanent magnets **120, 220** in the float **102, 202, 302** is sensed by the magnetic proximity sensors embedded within the attachment band **103, 203, 303,** when the float approximates said magnetic proximity sensors embedded within the attachment band **103, 203, 303.**

In an exemplary implementation, as shown in **Figures 1** and **2****,** the container **101, 201** is operably coupled with the lower lid **105, 205** and contains a liquid within. The attachment band **103, 203** is attached at a certain height '***h***' above the lower lid **105, 205.** The float **102, 202** free-floats in the liquid contained therein and as the liquid slowly drips through the nozzle **1052, 2052,** the liquid level decreases. Therefore, the float **102, 202** which was at a greater vertical distance '***h1***' from the attachment band **103, 203** initially, gradually comes in proximity of the attachment band **103, 203,** and the vertical distance reduces from '***h1***' to '***h2***'*.* An electric circuit comprising the one or more magnetic proximity sensors, battery and an alarming device, gets activated by the proximity of the magnetic proximity sensors to the one or more permanent magnets **120, 220,** thereby raising an alarm or lighting a LED present or activating an IoT operated device or activating any other alerting means.

In an exemplary implementation of the embodiments, the apparatus for monitoring the level of a liquid is configured to detect different levels of liquid in the container. In such embodiments, the alarming device optionally outputs a scale, number or percentage of the fullness/emptiness of the container. In some examples, such an apparatus configured to detect different levels of liquid comprises several attachment bands disposed on the exterior wall of the container. Each one of the bands is characterized by a different magnetic field feature, such as polarity, distinctively detectable by the magnetic proximity sensor. In other examples, such an apparatus configured to detect different levels of liquid comprises of at least one magnetic proximity sensor configured to detect different distances from the permanent magnets.

In an exemplary implementation of the above embodiments, the apparatus for monitoring the level of a liquid is a liquid (water) feeder device for a pet. The liquid feeder comprises a container for storing liquid within, a float which is disposed within the container and free-floats on the liquid contained within, and an attachment band disposed on the exterior wall of the container. The attachment band is attached at a certain height from the bottom of the container. The float free-floats in the liquid contained therein and as the liquid slowly drips through a nozzle at the bottom of the container, the liquid level decreases accordingly. Therefore, the float which was at a greater distance from the attachment band initially, gradually comes in proximity of the attachment band, and the vertical distance reduces. An electric circuit comprising the one or more magnetic proximity sensors, battery and an alarming device, gets activated by the proximity of the magnetic proximity sensors to the one or more permanent magnets, thereby raising an alarm or lighting a LED present or activating an IoT operated device or activating any other alerting means, thereby indicating the need for re-filling the water feeder so that the pet can quench their thirst.

When the one or more magnetic proximity sensors come in proximity of the one or more permanent magnets, when the liquid gets depleted in the container by flowing or dripping through at least one output nozzle in the container, the electric circuitry activates the alarming device, to alert the user that the liquid in the container is getting depleted and needs to be refilled.

In the above-mentioned embodiments and exemplary implementation, the attachment band is an adjustable, elastic band disposed on the exterior wall of the container, at a customized level predetermined by a user, where the customized level either indicates depletion of the liquid beyond the user chosen level in the container or caters to customized level monitoring purposes.

Some of the non-limiting advantages of an apparatus for monitoring of a level of a liquid within a container are:
1. Remote and user-customizable monitoring of a liquid level in a container is possible.
2. Alerting a user/caregiver to efficiently refill or change the container containing a liquid.
3. Less manual intervention or observation.

Although an apparatus for monitoring of a level of a liquid within a container, a pet water feeder has been described in language specific to structural features, it is to be understood that the embodiments disclosed in the above section are not necessarily limited to the specific methods or devices described herein. Rather, the specific features are disclosed as examples of implementations of an apparatus for monitoring of a level of a liquid within a container, a pet water feeder.

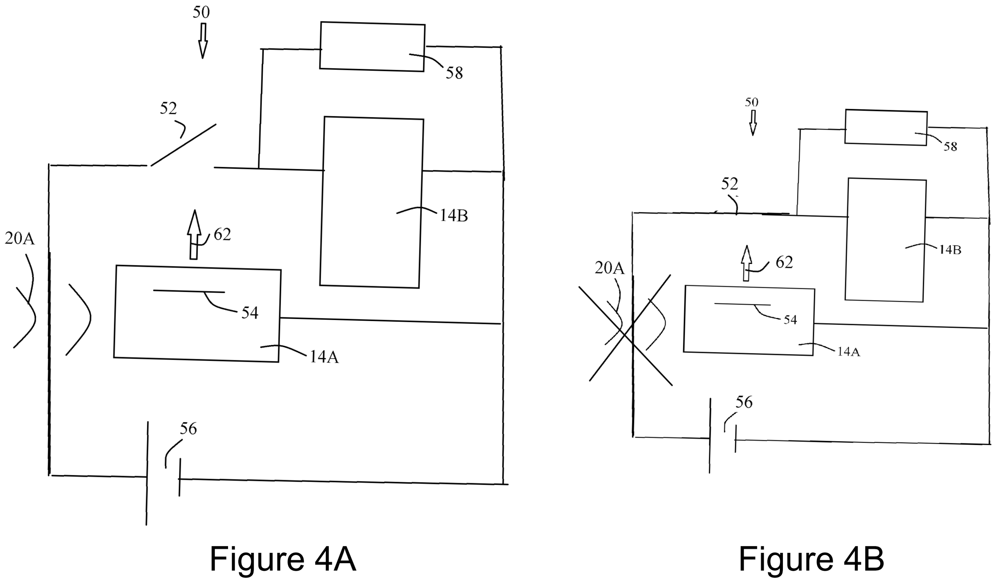

Reference is now made to **Figure 4A** showing exemplary electric circuitry **50** of the free float **102, 202, 302** for monitoring of a level of a liquid within container, shown in **Figures 1** to **3****,** in a latent mode. Circuit **50** includes actuation module **52,** battery **56,** optionally alarming device **14B,** such as a flicker or buzzer, as well as alternatively or additionally IoT device **58.** Actuation module **52** is controlled by magnetic proximity sensor **14A.** In a latent mode, magnetically sensitive element **54** of magnetic proximity sensor **14A** controls actuation module **52** to be turned off. The latent mode is determined when magnetically sensitive element **54** of magnetic proximity sensor **14A** is not affected by and/or exposed to magnetic field **20A,** thus ceasing consuming the energy from battery **56.**

Reference is now made to **Figure 4B** showing exemplary electric circuitry **50** of the free float **102, 202, 302** for monitoring of a level of a liquid within container, shown in **Figures 1** to **3****,** in an active mode. Actuation module **52** of circuit **50** in the active mode is turned on. The active mode is determined when magnetically sensitive element **54** of magnetic proximity sensor **14A** is affected by and/or exposed to magnetic field **20A,** formed for instance by permanent magnets **120, 220, 320** within the attachment band **103, 203, 303** shown in **Figures 1** to **3****.** In the active mode alarming device **14B,** such as a flicker or buzzer, is activated. Alternatively or additionally In the active mode IoT device **58** is activated and configured to transmit a message to via a computer network to a predefined computing device.

In some preferred embodiments, exemplary electric circuitry **50** of the free float **102, 202, 302** for monitoring of a level of a liquid within container, shown in **Figures 1** to **3****,** comprises a cable or wireless port (not shown), for connecting a controller (not shown) of electric circuitry **50** to a management system (not shown), configured *inter alia* for setting, resetting and updating the parameters of various constituents, such as ARDUINO (R) chipset, of electric circuitry **50** and/or for uploading firmware to electric circuitry **50.**

In some preferred embodiments, exemplary electric circuitry **50** of the free float **102, 202, 302** for monitoring of a level of a liquid within container, shown in **Figures 1** to **3****,** alternatively or additionally alarming device **14B,** comprises a communications module (not shown) connectable to a central monitoring system or console (not shown), configured *inter alia* for monitoring the data collected by the free float **102, 202, 302.** In such embodiments the central monitoring system or console (not shown), which is preferably software-implemented, is configured to monitor simultaneously numerous free floats **102, 202, 302** and typically comprises a dashboard, displaying the relevant data and/or alerts.

In some preferred embodiments, exemplary electric circuitry **50** of the free float **102, 202, 302** comprises a controller (not shown) configured to detect abnormal patterns or thresholds of liquid consumption, so that in case of failures (such as water is not being consumed due to a blockage), the controller is programmed to expect the pet to consume a specific range of amount of water, over a predetermined period of time. If pet is sick, it may drink more or less than usual and the controller can be programmed to detect patterns or thresholds of liquid consumption which diverge from the preset values.

In some preferred embodiments, exemplary electric circuitry **50** of the free float **102, 202, 302** comprises a computing device, as elaborated hereunder. In some preferred embodiments, exemplary electric circuitry **50** of the free float **102, 202, 302** comprises a communication module configured for computer and/or data communication over a computer network, as defined hereabove.

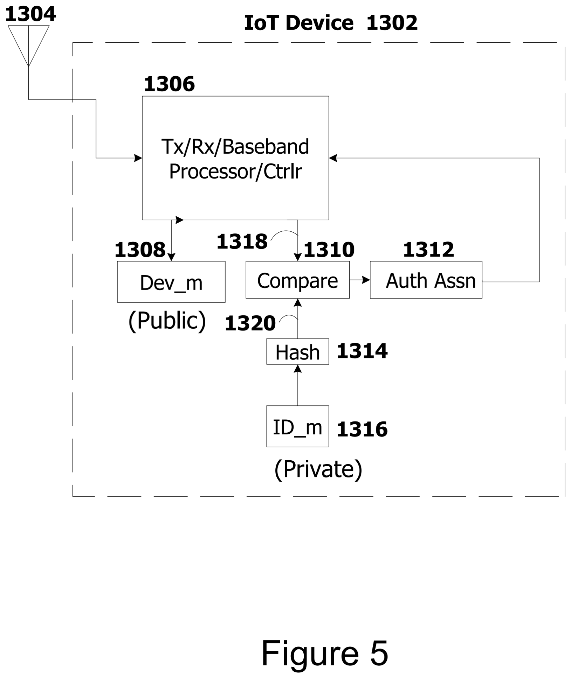

Reference is now made to **Figure 5** shows an exemplary IoT device **1302** which includes an antenna **1304** for communication with antennas and propagation [AP] (not shown). Exemplary IoT device **1302** shown in **Figure 5** is configured to receive messages, preferably in an encrypted form. A controller **1306** of exemplary IoT device **1302,** which includes: a transmitter, receiver and baseband processor, is coupled to the antenna and is operative to execute protocols. The controller **1306** is coupled to a public identifier Dev_m **1308,** which is accessible directly to the controller **1306,** and may include information printed on the IoT device **1302,** or is transmitted by the IoT device, such as a registration request. The private identifier ID_m **1316** is not publicly accessible. In one example shown in **Figure 5****,** the private ID_m **1316** may be hashed **1314** using a Secure Hash Algorithm (SHA), such as the SHA-2 as published by the National Institute of Standards and Technology (NIST) and described in US patent 6829355.

An incoming registration acknowledgement which includes a secure ID_m as a hash may be compared **1318** to generate an authorization for association **1312** to the controller **1306.** Alternatively, the ID_m **1316** may be directly coupled to the controller **1306,** which decrypts an incoming registration acknowledgement and the decrypted received ID_m from a message may be directly compared to the ID_m **1316** which is unique to the IoT device **1302** and not directly accessible from an external query.

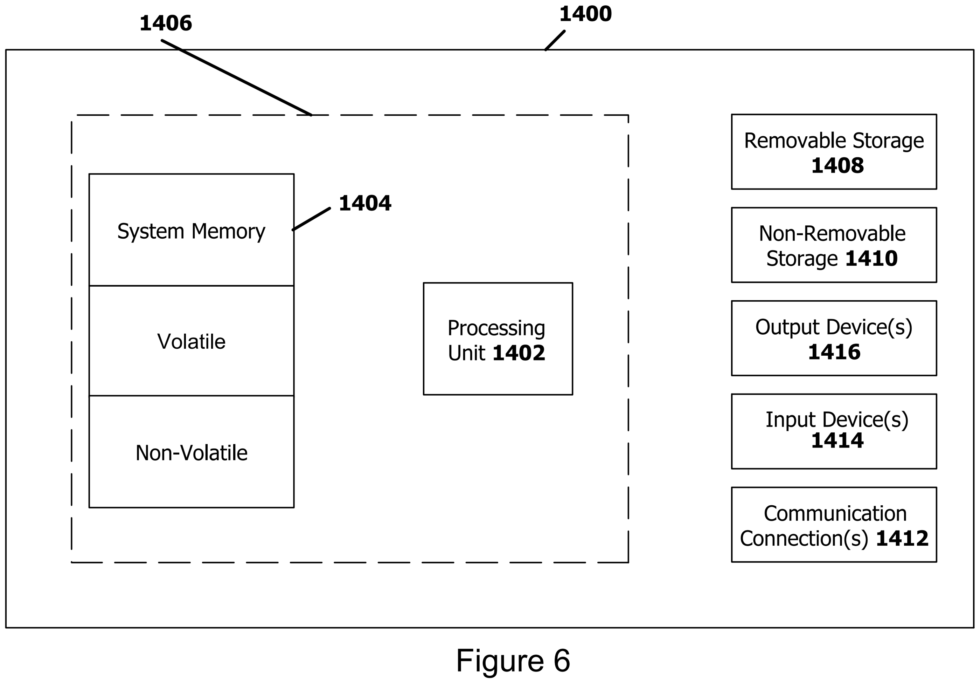

With reference to **Figure 6****,** an exemplary system for implementing aspects described herein includes a computing device, such as computing device **1400.** In its most basic configuration, computing device **1400** typically includes at least one processing unit **1402** and memory **1404.** Depending on the exact configuration and type of computing device, memory **1404** may be volatile (such as random-access memory (RAM)), non-volatile (such as read-only memory (ROM), flash memory, etc.), or some combination of the two. This most basic configuration is illustrated in **Figure 6** by dashed line **1406.**

Computing device **1400** may have additional features/functionality. For example, computing device **1400** may include additional storage (removable and/or non-removable) including, but not limited to, magnetic or optical disks or tape. Such additional storage is illustrated in **Figure 6** by removable storage **1408** and non-removable storage **1410.**

Computing device **1400** typically includes a variety of computer readable media. Computer readable media can be any available media that can be accessed by computing device **1400** and include both volatile and non-volatile media, and removable and non-removable media. Computer storage media include volatile and non-volatile, and removable and non-removable media implemented in any method or technology for storage of information such as computer readable instructions, data structures, program modules or other data. Memory **1404,** removable storage **1408,** and non-removable storage **1410** are all examples of computer storage media. Computer storage media include, but are not limited to, RAM, ROM, electrically erasable program read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device **1400.** Any such computer storage media may be part of computing device **1400.**

Computing device **1400** may contain communications connection(s) **1412** that allow the device to communicate with other devices. Computing device **1400** may also have input device(s) **1414** such as a keyboard, mouse, pen, voice input device, touch input device, etc. Output device(s) **1416** such as a display, speakers, printer, etc. may also be included. All these devices are well known in the art and need not be discussed at length here.

It should be understood that the various techniques described herein may be implemented in connection with hardware or software or, where appropriate, with a combination of both. Thus, the processes and apparatus of the presently disclosed subject matter, or certain aspects or portions thereof, may take the form of program code (i.e., instructions) embodied in tangible media, such as floppy diskettes, CD-ROMs, hard drives, or any other machine-readable storage medium where, when the program code is loaded into and executed by a machine, such as a computer, the machine becomes an apparatus for practicing the presently disclosed subject matter.

Although exemplary implementations may refer to utilizing aspects of the presently disclosed subject matter in the context of one or more stand-alone computer systems, the subject matter is not so limited, but rather may be implemented in connection with any computing environment, such as a network or distributed computing environment. Still further, aspects of the presently disclosed subject matter may be implemented in or across a plurality of processing chips or devices, and storage may similarly be effected across a plurality of devices. Such devices might include PCs, network servers, and handheld devices, for example.

Embodiments of the invention, corresponding to the original claims of PCT/IL2021/050632 (published as WO 2021/245652 A1), include the following:
1. An apparatus for monitoring of a level of a liquid medium, comprising:
   a) a container, configured to contain a liquid medium therein;
   b) an attachment band disposed on exterior wall of said container, said attachment band comprising at least one permanent magnet, embedded therein; and
   c) a free float comprising an electric circuitry comprising:
      i. a battery;
      ii. at least one magnetic proximity sensor;
      iii. an alarming device configured for generating an alert, wherein said alarming device is selected form the group consisting of: a LED, flicker, buzzer, IoT device and communication device;
      iv. an actuation module configured to controllably activate said alarming device, wherein actuation of said actuation module is controlled by said at least one magnetic proximity sensor;

   wherein said float being disposed within said container and free-floating or immersed on top of said liquid so that said float moves laterally and vertically into and out of proximity of said permanent magnets embedded within said attachment band, with variance of said level of said liquid;
   wherein proximity of said float to said attachment band is sensed by said at least one magnetic proximity sensor embedded within said float, when said float is in proximity with said permanent magnets embedded within said attachment band.
2. The monitoring apparatus as in embodiment 1, wherein said attachment band is disposed on said exterior wall of said container at a customized level predetermined by a user, wherein said customized level indicates depletion of said liquid beyond a user chosen level in said container.
3. The monitoring apparatus as in any one of the embodiments 1 or 2, wherein said electric circuitry is configured to activate said alarming device when said float is in proximity with said permanent magnets embedded within said attachment band.
4. The monitoring apparatus as in any one of the embodiments 1 to 3, wherein said apparatus is a pet water feeder for supplying water and monitoring said level of water thereof.
5. The monitoring apparatus as in any one of the embodiments 1 to 4, wherein said float further comprises a port, connectable to a management system, configured for setting various parameters of said float and/or for uploading firmware/software thereto.
6. The monitoring apparatus as in any one of the embodiments 1 to 5, wherein said attachment band is a plurality of attachment bands disposed at different levels on said exterior wall of said container and wherein said at least magnetic proximity sensor is configured for discreetly detecting an attachment band of said plurality of attachment bands disposed at different levels on said exterior wall of said container.
7. The monitoring apparatus as in any one of the embodiments 1 to 6, wherein said float further comprises a port, connectable to a monitoring system, configured to send push messages.
8. The monitoring apparatus as in any one of the embodiments 1 to 7, wherein said float further comprises a port, connectable to a monitoring system, wherein said monitoring system is configured to monitor a plurality of floats.
9. The monitoring apparatus, as in any one of the embodiments 1 to 8, wherein said electric circuitry further comprises a controller configured to detect abnormal patterns and/or thresholds of liquid consumption, indicative of divergence from the preset values.
10. A method of monitoring of a level of a liquid medium, comprising:
   a) providing a container, configured to contain a liquid medium therein;
   b) providing an apparatus for monitoring of a level of a liquid medium, wherein said apparatus comprises of:
      I) providing an attachment band disposable on exterior wall of a liquid medium container, said attachment band comprises at least one permanent magnet embedded therein; and
      II) providing a free float comprising an electric circuitry comprising:
         i. an electrical battery;
         ii. at least one magnetic proximity sensor;
         iii. an alarming device configured for generating an alert, wherein said alarming device is selected from the group consisting of: a LED, flicker, buzzer, IoT device and communication device;
         iv. an actuation module configured to controllably activating said alarming device, wherein actuation of said actuation module is controlled by said at least one magnetic proximity sensor;

   wherein said float free-floating or immersed on top of said liquid so that said float moves laterally and vertically into and out of proximity of said permanent magnets embedded within said attachment band, with variance of said level of said liquid;
   wherein proximity of said float to said attachment band is sensed by said at least one magnetic proximity sensor embedded within said float, when said float is in proximity with said permanent magnets embedded within said attachment band.
11. The monitoring method as in embodiment 10, wherein providing a liquid medium container comprises disposing said attachment band on said exterior wall of said container at a customized level predetermined by a user, indicating depletion of said liquid beyond a user chosen level in said container.
12. The monitoring method as in any one of the embodiments 10 or 11, wherein providing a free float comprising an electric circuitry comprises the step of activating said alarming device when said float is in proximity with said permanent magnets embedded within said attachment band.
13. The monitoring method as in any one of the embodiments 10 to 12, wherein providing an apparatus comprises the step of supplying water and monitoring said level of water thereof.
14. The monitoring method as in any one of the embodiments 10 to 13, wherein said float comprising a port, further comprises the step of connecting said port to a management system for setting various parameters of said float and/or for uploading firmware/software thereto.
15. The monitoring method as in any one of the embodiments 10 to 14, wherein providing attachment band comprises providing a plurality of attachment bands disposed at different levels on said exterior wall of said container and wherein said at least magnetic proximity sensor is configured for discreetly detecting an attachment band of said plurality of attachment bands disposed at different levels on said exterior wall of said container.
16. The monitoring method as in any one of the embodiments 10 to 15, wherein said float comprising a port, further comprises the step of connecting said port to a monitoring system for sending push messages.
17. The monitoring method as in any one of the embodiments 10 to 16, wherein said float comprising a port, further comprises the step of connecting said port to a monitoring system for monitoring a plurality of floats.
18. The monitoring method as in any one of the embodiments 10 to 17, wherein said electric circuitry comprising a controller, further comprises the step of detecting abnormal patterns and/or thresholds of liquid consumption, indicative of divergence from the preset values.
19. An apparatus for monitoring of a level of a liquid medium, comprising:
   a) a container, configured to contain a liquid medium therein;
   b) an attachment band disposed on exterior wall of said container, said attachment band comprises:
      i. an electric power source;
      ii. at least one magnetic proximity sensor;
      iii. an alarming device configured for generating an alert, wherein said alarming device is selected form the group consisting of: a LED, flicker, buzzer, IoT device and communication device;
      iv. an actuation module configured to controllably activating said alarming device, wherein actuation of said actuation module is controlled by said at least one magnetic proximity sensor;
   c) a free float comprising at least one permanent magnet; wherein said float being disposed within said container and free-floating or immersed on top level of said liquid, so that said float moves laterally and vertically into and out of proximity of said magnetic proximity sensors with variance of said level of said liquid, and
   wherein proximity of said float to said attachment band is sensed by said magnetic proximity sensors embedded within said attachment band when said float is in proximity with said magnetic proximity sensors.
20. The monitoring apparatus as in embodiment 19, wherein said attachment band is disposed on said exterior wall of said container at a customized level predetermined by a user, wherein said customized level indicates depletion of said liquid beyond a user chosen level in said container.
21. The monitoring apparatus as in any one of the embodiments 19 or 20, wherein said electric circuitry within said attachment band is configured to activate said alarming device, when said at least one permanent magnet of said free float is in proximity within said attachment band.
22. The monitoring apparatus as in any one of the embodiments 19 to 21, wherein said apparatus is a pet water feeder for supplying water and monitoring said level of water thereof.
23. The monitoring apparatus as in any one of embodiments 19 to 22, wherein said float further comprises a port, connectable to a management system, configured for setting various parameters of said float and/or for uploading firmware/software thereto.
24. The monitoring apparatus as in any one of embodiments 19 to 23, wherein said attachment band is a plurality of attachment bands disposed at different levels on said exterior wall of said container and wherein said at least magnetic proximity sensor of each one of said plurality of attachment bands is configured for discreetly detecting said at least one permanent magnet of said free float.
25. The monitoring apparatus as in any one of embodiments 19 to 24, wherein said float further comprises a port, connectable to a monitoring system, configured to send push messages.
26. The monitoring apparatus as in any one of embodiments 19 to 25, wherein said float further comprises a port, connectable to a monitoring system, wherein said monitoring system is configured to monitor a plurality of floats.
27. The monitoring apparatus, as in any one of embodiments 19 to 26, wherein said electric circuitry further comprises a controller configured to detect abnormal patterns and/or thresholds of liquid consumption, indicative of divergence from the preset values.
28. A method of monitoring of a level of a liquid medium, comprising:
   a) providing a container, configured to contain a liquid medium therein;
   b) providing an apparatus for monitoring of a level of a liquid medium, wherein said apparatus comprises:
      I) providing an attachment band disposable on exterior wall of a liquid medium container, said attachment band comprises at least one permanent magnet embedded therein;
      II) providing a free float comprising an electric circuitry comprising:
         i. an electrical battery;
         ii. at least one magnetic proximity sensor;
         iii. an alarming device configured for generating an alert, wherein said alarming device is selected from the group consisting of: a LED, flicker, buzzer, IoT device and communication device;
         iv. an actuation module configured to controllably activate said alarming device, wherein actuation of said actuation module is controlled by said at least one magnetic proximity sensor; and
      III) providing a free float comprising at least one permanent magnets;

   wherein said float free-floating or immersed on a top level of a liquid, so that said float moves laterally and vertically into and out of proximity of said magnetic proximity sensors with variance of a level of said liquid, and
   wherein proximity of said float to said attachment band is sensed by said magnetic proximity sensors embedded within said attachment band when said float is in proximity with said magnetic proximity sensors.
29. The monitoring method as in embodiment 28, wherein providing a liquid medium container comprises disposing said attachment band on said exterior wall of said container at a customized level predetermined by a user, indicating depletion of said liquid beyond a user chosen level in said container.
30. The monitoring method as in any one of the embodiments 28 or 29, wherein providing a free float comprising an electric circuitry comprises the step of activating said alarming device when said float is in proximity with said permanent magnets embedded within said attachment band.
31. The monitoring apparatus as in any one of embodiments 28 to 30, wherein said apparatus is a pet water feeder for supplying water and monitoring said level of water thereof.
32. The monitoring method as in any one of the embodiments 28 to 31, wherein said float comprising a port, further comprises the step of connecting said port to a management system for setting various parameters of said float and/or for uploading firmware/software thereto.
33. The monitoring apparatus as in any one of the embodiments 28 to 32, wherein providing attachment band comprises providing a plurality of attachment bands disposed at different levels on said exterior wall of said container and wherein said at least magnetic proximity sensor of each one of said plurality of attachment bands is configured for discreetly detecting said at least one permanent magnet of said free float.
34. The monitoring method as in any one of the embodiments 28 to 33, wherein said float comprising a port, further comprises the step of connecting said port to a monitoring system for sending push messages.
35. The monitoring method as in any one of the embodiments 28 to 34, wherein said float comprising a port, further comprises the step of connecting said port to a monitoring system for monitoring a plurality of floats.
36. The monitoring method as in any one of the embodiments 28 to 35, wherein said electric circuitry comprising a controller, further comprises the step of detecting abnormal patterns and/or thresholds of liquid consumption, indicative of divergence from the preset values.

## Claims

1. An apparatus for monitoring a level of a liquid in a container, comprising:
a container configured to contain a liquid;
a free-floating float disposed within the container, the float comprising:
a sealed housing;
an onboard electric power source;
at least one magnetic proximity sensor;
an actuation module operatively coupled to the magnetic proximity sensor; and
an alerting device operatively coupled to the actuation module; and
a magnetic reference element positioned external to the container;
wherein the float is configured to move vertically with changes in a liquid level within the container;
wherein the magnetic proximity sensor is configured to detect proximity of the magnetic reference element through a wall of the container; and
wherein the actuation module is configured to activate the alerting device when the detected proximity corresponds to a predetermined liquid level.

2. The apparatus of claim 1, wherein the magnetic reference element is adjustably positionable along an exterior surface of the container to define the predetermined liquid level.

3. The apparatus of claim 1, wherein the float housing is hermetically sealed to prevent liquid ingress.

4. The apparatus of claim 1, wherein the alerting device comprises at least one of a visual indicator, an audible indicator, or a wireless communication module.

5. The apparatus of claim 4, wherein the wireless communication module is configured to transmit a notification to a remote computing device.

6. The apparatus of claim 1, wherein the float is configured to enter a low-power state when the magnetic proximity sensor is outside a detection range of the magnetic reference element.

7. The apparatus of claim 1, wherein the container wall is opaque, and the magnetic proximity sensor operates independently of optical detection.
